# EUROPEAN PATENT APPLICATION

(11) **EP 4 712 286 A1**
(43) Date of publication of application: **18.03.2026**
(21) Application number: 23936435.9
(22) Date of filing: 27.11.2023
(51) Int. Cl.: H02J 3/14, F25B 30/02, F25B 30/06, H02J 3/38

(54) **POWER SUPPLY SYSTEM OF HEAT PUMP AND HEAT PUMP SYSTEM**

(30) Priority: 11.05.2023 CN 202310535427
(71) Applicant: Bluesight Power Supply Ltd, Hefei, Anhui 230000 (CN)
(72) Inventor: ZOU, Haiyan, Hefei, Anhui 230000 (CN); TAO, Lei, Hefei, Anhui 230000 (CN); WANG, Weijun, Hefei, Anhui 230000 (CN)
(74) Representative: Biallo, Dario
(86) International application number: PCT/CN2023/134251
(87) International publication number: WO 2024/230131

(57) **Abstract**

The present application discloses a power supply system of a heat pump and a heat pump system. The power supply system comprises a controller, a first power conversion circuit, a second power conversion circuit, and an inverter. A first end of the first power conversion circuit is configured to be connected to a new energy direct-current power supply; a second end of the first power conversion circuit is connected to a direct-current bus; a direct-current end of the inverter is connected to the direct-current bus; an alternating-current end of the inverter is configured to be connected to a compressor; a direct-current end of the second power conversion circuit is connected to the direct-current bus; an alternating-current end of the second power conversion circuit is configured to be connected to a power grid; and the controller is configured to reduce the working power of the compressor when the sum of the output power of the first power conversion circuit and the output power of the second power conversion circuit is less than the required power of the compressor, so as to keep the energy balance of the power supply system. In this way, undervoltage situations of the power supply system can be reduced, the power supply system of the heat pump has better safety and stability, and the working efficiency of the heat pump system can be improved.

## Description

This application claims the priority to Chinese Patent Application No. 202310535427.0, titled "POWER SUPPLY SYSTEM OF HEAT PUMP AND HEAT PUMP SYSTEM", filed on May 11, 2023 with the China National Intellectual Property Administration, which is incorporated herein by reference in its entirety.

### FIELD

The present disclosure relates to the technical field of renewable energy, and in particular to a power supply system for a heat pump and a heat pump system.

### BACKGROUND

In response to the goals of carbon peak and carbon neutrality, a heat pump system has attracted an increasing attention. Taking an air-source heat pump as an example, a heat pump system includes a compressor and a power supply system. The power supply system supplies power to the compressor, enabling the compressor to drive air and generate heat exchange for supplying heat. Compared with supply heat with fossil fuel, the heat pump system produces less carbon dioxide, which is more energy-efficient and environmentally friendly.

To further enhance energy efficiency and environmental protection, on the basis of using a power grid for power supply, direct-current power supplies with renewable energy such as photovoltaic power generation or fuel cells may be provided for the power supply system for a heat pump for joint power supply. However, when the power grid has a power limitation or experiences a fault, the power supplied by the direct-current power supply with renewable energy, which is random, may fail to meet the requirement of the compressor, resulting in undervoltage of the power supply system for a heat pump, and affecting normal operation of the compressor of the heat pump system.

### SUMMARY

In view of this, a power supply system for a heat pump and a heat pump system are provided according to the present disclosure, to improve the safety and stability of the power supply system for a heat pump and to enhance operational efficiency of the heat pump system.

In order to address the above issues, the following technical solutions are provided according to the present disclosure.

In a first aspect, a power supply system for a heat pump is provided according to the present disclosure, including a controller, a first power conversion circuit, a second power conversion circuit, and an inverter.

A first end of the first power conversion circuit is configured to connect to a direct-current power supply with renewable energy, and a second end of the first power conversion circuit is connected to a direct-current bus.

A direct-current end of the inverter is connected to the direct-current bus, and an alternating-current end of the inverter is configured to connect to a compressor.

A direct-current end of the second power conversion circuit is connected to the direct-current bus, and an alternating-current end of the second power conversion circuit is configured to connect to a power grid.

The controller is configured to reduce an operating power of the compressor in response to a sum of an output power of the first power conversion circuit and an output power of the second power conversion circuit being less than a required power of the compressor, to maintain a power balance of the power supply system.

In an embodiment, the controller is further configured to reduce an output power of the inverter in response to the sum of the output power of the first power conversion circuit and the output power of the second power conversion circuit being less than the required power of the compressor, where a reduced output power of the inverter matches a reduced operating power of the compressor.

In an embodiment, for reducing the operating power of the compressor, the controller is further configured to determine, based on a voltage of the direct-current bus, whether the sum of the output power of the first power conversion circuit and the output power of the second power conversion circuit is less than the required power of the compressor.

In an embodiment, the controller is further configured to obtain a regulation instruction based on the voltage of the direct-current bus, a preset minimum voltage, and a preset output instruction for the compressor, and control the compressor based on the regulation instruction, where the preset output instruction includes a torque instruction, a rotational speed instruction, or a frequency instruction for the compressor, and the regulation instruction corresponds to the preset output instruction for the compressor.

In an embodiment, the controller is further configured to obtain a process instruction based on the voltage of the direct-current bus and the preset minimum voltage, and determine the one with a smaller value of the process instruction and the preset output instruction as a first regulation instruction, where the process instruction corresponds to the preset output instruction for the compressor.

In an embodiment, the direct-current power supply with renewable energy includes a photovoltaic array. The first power conversion circuit includes a first direct-current converter, where a first end of the first direct-current converter is configured to connect to the photovoltaic array, and a second end of the first direct-current converter is connected to the direct-current bus. The controller is further configured to control the first direct-current converter to perform a maximum power point tracking control on the photovoltaic array.

In an embodiment, the controller is further configured to control, in response to a difference between the output power of the first power conversion circuit and an input power at a direct-current end of the second power conversion circuit being greater than the operating power of the compressor, the first direct-current converter to reduce an output power of the photovoltaic array.

In an embodiment, the direct-current power supply with renewable energy includes a fuel cell. The first power conversion circuit includes a second direct-current converter, where a first end of the second direct-current converter is configured to connect to the fuel cell, and a second end of the second direct-current converter is connected to the direct-current bus.

In an embodiment, the controller is further configured to control the second power conversion circuit to regulate a voltage of the direct-current bus within a preset voltage range.

In an embodiment, the power supply system further includes a power conversion system, where a first end of the power conversion system is connected to a power storage device, and a second end of the power conversion system is connected to the direct-current bus. The controller is further configured to reduce the operating power of the compressor in response to a sum of the output power of the first power conversion circuit, the output power of the second power conversion circuit, and an output power of the power conversion system being less than the required power of the compressor, to maintain the power balance of the power supply system.

In an embodiment, the controller is further configured to, in response to the output power of the first power conversion circuit being less than the required power of the compressor: regulate the output power of the power conversion system to supplement a power difference between the required power and the output power of the first power conversion circuit, and reduce a power drawn from the power grid by the second power conversion circuit.

The controller is further configured to, in response to the output power of the first power conversion circuit being greater than the required power of the compressor: regulate an input power of the power conversion system to store the power difference between the output power of the first power conversion circuit and the required power, and reduce a power fed back to the power grid by the second power conversion circuit.

In an embodiment, the direct-current power supply with renewable energy includes a photovoltaic array and a fuel cell. The first power conversion circuit includes a first direct-current converter and a second direct-current converter. The power supply system further includes a power conversion system.

A first end of the first direct-current converter is configured to connect to the photovoltaic array, and a second end of the first direct-current converter is connected to the direct-current bus.

A first end of the second direct-current converter is configured to connect to the fuel cell, and a second end of the second direct-current converter is connected to the direct-current bus.

A first end of the power conversion system is connected to a power storage device, and a second end of the power conversion system is connected to the direct-current bus.

In a second aspect, a heat pump system is provided according to the present disclosure, including a compressor and the power supply system for a heat pump described above.

A first end of the power supply system for a heat pump is configured to connect to a direct-current power supply with renewable energy.

A second end of the power supply system for a heat pump is configured to connect to a power grid.

A third end of the power supply system for a heat pump is connected to the compressor and is configured to supply power to the compressor.

It can be seen that the present disclosure has the following beneficial effects.

The power supply system for a heat pump according to the present disclosure includes a controller, a first power conversion circuit, a second power conversion circuit, and an inverter. A first end of the first power conversion circuit is configured to connect to a direct-current power supply with renewable energy, and a second end of the first power conversion circuit is connected to a direct-current bus. A direct-current end of the inverter is connected to the direct-current bus, and an alternating-current end of the inverter is configured to connect to a compressor. A direct-current end of the second power conversion circuit is connected to the direct-current bus, and an alternating-current end of the second power conversion circuit is configured to connect to a power grid. The controller is configured to reduce an operating power of the compressor in response to a sum of an output power of the first power conversion circuit and an output power of the second power conversion circuit being less than a required power of the compressor, to maintain a power balance of the power supply system. After reducing the operating power of the compressor, the power consumed by the compressor is decreased, ensuring that the power supply system has sufficient power to support the voltage of the direct-current bus, achieving the power balance of the power supply system, and improving safety and stability. Compared with a case that the compressor fails to operate normally due to an undervoltage of the power supply system, the heat pump system generates more thermal energy.

### BRIEF DESCRIPTION OF THE DRAWINGS

FIG. 1 is a schematic diagram of a power supply system for a heat pump according to an embodiment of the present disclosure;
FIG. 2 is a schematic diagram showing a controller controlling a compressor according to an embodiment of the present disclosure;
FIG. 3 is a schematic diagram of a power supply system for a heat pump connected to a photovoltaic array according to an embodiment of the present disclosure;
FIG. 4 is a schematic diagram of a power supply system for a heat pump connected to a photovoltaic array and a power storage device according to an embodiment of the present disclosure;
FIG. 5 is a schematic diagram of a power supply system for a heat pump connected to a fuel cell according to an embodiment of the present disclosure;
FIG. 6 is a schematic diagram of a power supply system for a heat pump according to another embodiment of the present disclosure; and
FIG. 7 is a schematic diagram of a heat pump system according to an embodiment of the present disclosure.

### DETAILED DESCRIPTION

In order to enable those skilled in the art to understand and implement the technical solutions according to the present disclosure, specific application scenarios of the present disclosure are described below.

A case that a photovoltaic array and a power grid jointly supply power to a heat pump system is taken as an example. To maintain the safety and stability of the power grid itself, the power grid is typically configured with power limitation. That is, there is a limitation on drawing power from the power grid, and the heat pump system fails to necessarily obtain all the required power from the power grid. As is well known, an electricity generation power of a photovoltaic array is closely related to solar irradiance. On cloudy days, the power supplied by the photovoltaic array is relatively low. At this time, if the power drawn from the power grid has already reached a power limit, and the power jointly supplied by the photovoltaic array and the power grid still fails to meet the required power of the compressor of the heat pump system, the heat pump system experiences an undervoltage and the compressor fails to operate normally. The heat pump system and the compressor resume normal operation only when the photovoltaic array supplies more power. Therefore, operational efficiency of the heat pump system is reduced.

Similarly, apart from scenarios that the power grid has the power limitation, sudden grid failures or other issues may also result in the power supplied by the power supply system failing to meet the required power of the compressor. The technical solutions according to the present disclosure are applicable to all such potential scenarios.

It should be understood that when other forms of direct-current power supplies with renewable energy and the power grid jointly supply power to the heat pump system, the heat pump system has the same problems due to the randomness of these direct-current power supplies with renewable energy.

Hereinafter, the embodiments of the present disclosure are described in detail with reference to drawings and specific implementations.

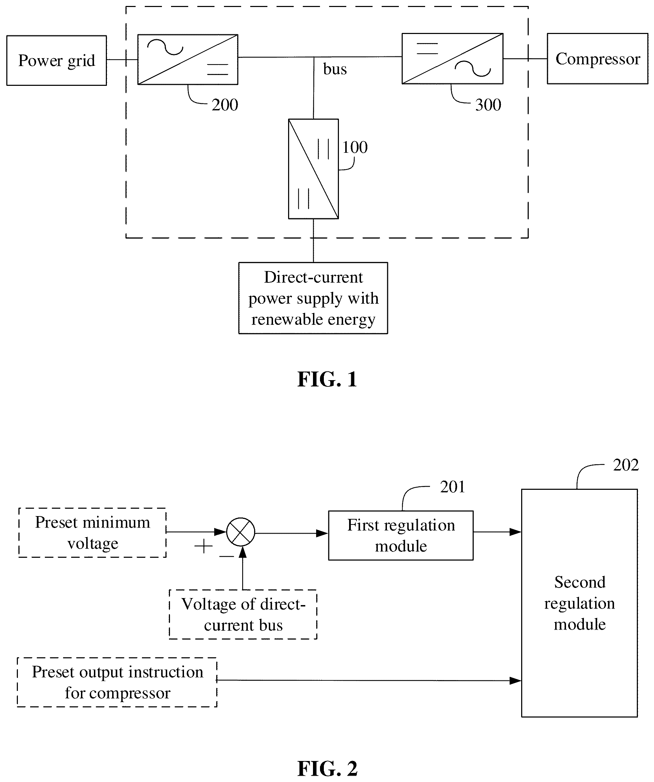

Referring to FIG. 1, FIG. 1 is a schematic diagram of a power supply system for a heat pump according to an embodiment of the present disclosure.

The power supply system for a heat pump in the embodiment of the present disclosure includes a controller (not shown in the figure), a first power conversion circuit 100, a second power conversion circuit 200, and an inverter 300.

A first end of the first power conversion circuit 100 is configured to connect to a direct-current power supply with renewable energy.

The type of the direct-current power supply with renewable energy is not limited in the present disclosure. For example, the direct-current power supply with renewable energy may be a photovoltaic array or a fuel cell.

A second end of the first power conversion circuit 100 is connected to a direct-current bus.

A direct-current end of the inverter 300 is connected to the direct-current bus, and an alternating-current end of the inverter 300 is configured to connect to a compressor.

A direct-current end of the second power conversion circuit 200 is connected to the direct-current bus, and an alternating-current end of the second power conversion circuit 200 is configured to connect to a power grid.

The controller is configured to reduce an operating power of the compressor in response to a sum of an output power of the first power conversion circuit 100 and an output power of the second power conversion circuit 200 being less than a required power of the compressor, to maintain a power balance of the power supply system.

In response to the sum of the output power of the first power conversion circuit 100 and the output power of the second power conversion circuit 200 being less than the required power of the compressor, the operating power of the compressor is reduced to cause the compressor to operate at a lower power. Although the operating power of the compressor is reduced, the power balance of the power supply system is maintained, improving safety and stability. Compared with a case that the compressor fails to operate normally due to the undervoltage of the power supply system, the heat pump system generates more thermal energy.

The method for determining whether the sum of the output power of the first power conversion circuit 100 and the output power of the second power conversion circuit 200 is less than the required power of the compressor is not limited in the present disclosure.

The controller may detect the output power of the first power conversion circuit 100 and the output power of the second power conversion circuit 200 separately, calculate the sum, and compare the sum with the required power of the compressor.

Further, the controller may detect a voltage of the direct-current bus. It should be understood that in a case that the consumed power and supplied power are balanced in the power supply system for a heat pump, the voltage of the direct-current bus is stable within a certain range. In a case that the voltage of the direct-current bus is excessively low, it indicates that the power consumed by the compressor exceeds the power supplied by both the first power conversion circuit 100 and the second power conversion circuit 200, and there is insufficient power to maintain the voltage of the direct-current bus, resulting in the voltage being low.

In addition to maintaining the power balance of the power supply system, since both the first power conversion circuit 100 and the second power conversion circuit 200 are connected to the direct-current bus, power generated by the direct-current power supply with renewable energy may be supplied to the compressor through the first power conversion circuit 100 and the inverter 300, avoiding a case that direct-current power supply is first fully integrated into the power grid and performs power conversion, and improving energy conversion efficiency of the power supply system for a heat pump.

The power supply system for a heat pump according to the embodiment of the present disclosure includes a controller, a first power conversion circuit, a second power conversion circuit, and an inverter. A first end of the first power conversion circuit is configured to connect to a direct-current power supply with renewable energy, and a second end of the first power conversion circuit is connected to a direct-current bus. A direct-current end of the inverter is connected to the direct-current bus, and an alternating-current end of the inverter is configured to connect to a compressor. A direct-current end of the second power conversion circuit is connected to the direct-current bus, and an alternating-current end of the second power conversion circuit is configured to connect to a power grid. The controller is configured to reduce an operating power of the compressor in response to a sum of an output power of the first power conversion circuit and an output power of the second power conversion circuit being less than a required power of the compressor, to maintain a power balance of the power supply system. After reducing the operating power of the compressor, the power consumed by the compressor is decreased, ensuring that the power supply system has sufficient power to support the voltage of the direct-current bus, achieving the power balance of the power supply system, and improving safety and stability. Compared with a case that the compressor fails to operate normally due to an undervoltage of the power supply system, the heat pump system generates more thermal energy.

In a possible implementation, since the controller reduces the power of the compressor, the controller is further configured to reduce an output power of the inverter in response to the sum of the output power of the first power conversion circuit and the output power of the second power conversion circuit being less than the required power of the compressor, where a reduced output power of the inverter matches a reduced operating power of the compressor.

The following describes a specific control method for the controller to regulate the operating power of the compressor, with reference to the drawings.

Referring to FIG. 2, FIG. 2 is a schematic diagram showing a controller controlling a compressor according to an embodiment of the present disclosure.

In the embodiment, a case that the controller is configured to determine whether the sum of the output power of the first power conversion circuit and the output power of the second power conversion circuit is less than the required power of the compressor based on the voltage of the direct-current bus, to regulate the operating power of the compressor is taken as an example.

The controller is further configured to obtain a regulation instruction based on the voltage of the direct-current bus, a preset minimum voltage, and a preset output instruction for the compressor, and control the compressor based on the regulation instruction.

The preset minimum voltage refers to a preset minimum voltage for the direct-current bus. When the voltage of the direct-current bus is lower than the preset minimum voltage, it indicates the power supply system experiences an undervoltage, and an output power of the compressor should be appropriately reduced.

The preset output instruction includes a torque instruction, a rotational speed instruction, or a frequency instruction for the compressor, and the regulation instruction corresponds to the preset output instruction for the compressor.

It should be understood that regulating any of a torque, a rotational speed, or a frequency of the compressor may result in the regulation of the operating power of the compressor.

In the embodiment, the aforementioned process is specifically implemented through a first regulation module 201 and a second regulation module 202.

The first regulation module 201 calculates a difference between the voltage of the direct-current bus and the preset minimum voltage, and obtains a process instruction through the first regulation module performing a calculation on the difference.

The second regulation module 202 compares the process instruction with the preset output instruction for the compressor. If the process instruction is smaller, the process instruction is determined as the regulation instruction, and the compressor regulates its operation based on a value of the process instruction. Otherwise, the preset output instruction is determined as the regulation instruction, and the compressor continues normal operation based on the original preset output instruction.

The implementation of the second regulation module 202 is not limited in the present disclosure. For example, the second regulation module 202 may be implemented by using a comparator, an adder, or a selector.

It should be understood that a value of the instruction for the compressor has a specified range. To prevent the regulation instruction outputted by the second regulation module 202 from being outside the specified range, the controller may further include an amplitude limiting module.

The amplitude limiting module limits an amplitude of the regulation instruction, so that the controller controls the compressor in a manner consistent with the specification, thereby enhancing the safety and rationality.

Through the above strategy, the output instruction for the compressor can be dynamically regulated in response to a change in the direct-current bus voltage. In a case that a total power supplied by the direct-current power supply with renewable energy and the power grid is insufficient, the voltage of the direct-current bus is inevitably decreased, and the value of the process instruction is correspondingly decreased, so that the final regulation instruction is lower than the original preset output instruction, the operating power of the compressor is reduced, and the direct-current bus operates stably above the preset minimum voltage of the direct-current bus.

The type of the direct-current power supply with renewable energy is not limited in the present disclosure. Correspondingly, the first power conversion circuit in the power supply system for a heat pump may adopt various topologies. Similarly, different topologies of the power supply system correspond to different control solutions, which may be described separately below with reference to the drawings.

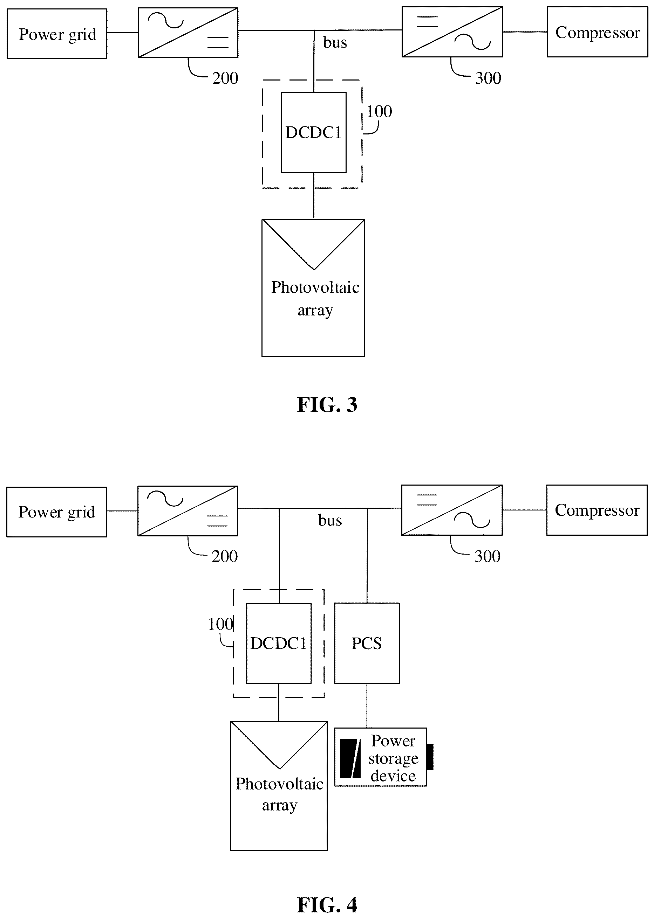

Referring to FIG. 3, FIG. 3 is a schematic diagram of a power supply system for a heat pump connected to a photovoltaic array according to an embodiment of the present disclosure.

The power supply system according to the embodiment of the present disclosure shares a same configuration as the power supply system for a heat pump described in the aforementioned embodiments, including: a controller (not shown in the figure), a first power conversion circuit 100, a second power conversion circuit 200, and an inverter 300.

The connection manners for the components may be referenced to the aforementioned embodiments and will not be repeated here.

In an embodiment, the direct-current power supply with renewable energy includes a photovoltaic array. Correspondingly, the first power conversion circuit 100 includes a first direct-current converter DCDC1.

A first end of the first direct-current converter DCDC1 is configured to connect to the photovoltaic array, and a second end of the first direct-current converter DCDC1 is connected to the direct-current bus.

Consistent with the aforementioned embodiments, the controller is configured to reduce the operating power of the compressor in response to the sum of the output power of the first power conversion circuit 100 and the output power of the second power conversion circuit 200 being less than the required power of the compressor, to maintain the power balance of the power supply system.

It should be understood that the first power conversion circuit 100 in the embodiment includes the first direct-current converter DCDC1, and the controller is further configured to reduce the operating power of the compressor in response to the sum of the output power of the first direct-current converter DCDC1 and the output power of the second power conversion circuit 200 being less than the required power of the compressor.

To better utilize the power generated by the photovoltaic array, the controller is further configured to control the first direct-current converter DCDC1 to perform maximum power point tracking (MPPT).

MPPT on the photovoltaic array enables the photovoltaic array to achieve a maximum power output, improving generation efficiency of the photovoltaic array and thereby enhancing power supply efficiency of the power supply system for a heat pump.

However, in a case that the photovoltaic array generates sufficient power, the requirement of supplying power to the heat pump system is satisfied, and surplus power fails to be fully transmitted to the power grid due to the power limitation on the power grid, the voltage of the direct-current bus is inevitably increased, resulting in an overvoltage of the power supply system. To ensure that the system still operates stably, the controller may implement a control on the first direct-current converter.

The controller is further configured to control the first direct-current converter DCDC1 to reduce an output power of the photovoltaic array in response to a difference between the output power of the first power conversion circuit 100 and an input power at a direct-current end of the second power conversion circuit 200 being greater than the operating power of the compressor.

When the difference between the output power of the first power conversion circuit 100 and the input power at the direct-current end of the second power conversion circuit 200 is greater than the operating power of the compressor, the controller stops controlling the photovoltaic array to perform MPPT. The output power of the photovoltaic array is reduced to avoid the occurrence of overvoltage in the power supply system, thereby ensuring the safety and stability of the power supply system.

To minimize power losses caused by multiple times of conversion within the power supply system, the controller is further configured to control the second power conversion circuit 200 to regulate the voltage of the direct-current bus within a preset voltage range.

During operation of the heat pump, the compressor preferentially utilizes power generated by the photovoltaic array. When the power generated by the photovoltaic array is insufficient, the second power conversion circuit 200 draws power from the power grid to supplement a power difference, to maintain a constant voltage of the direct-current bus. When the power generated by the photovoltaic array is sufficient, the second power conversion circuit 200 feeds the surplus power, in addition to the power consumed by the compressor, back to the power grid to maintain the constant voltage of the direct-current bus. When the heat pump does not operate, all the power generated by the photovoltaic array is fed back to the power grid.

The second power conversion circuit 200 regulates the voltage of the direct-current bus within the preset voltage range. The power generated by the photovoltaic array is preferentially utilized to supply power to the compressor, reducing energy conversion form the photovoltaic array to the power grid and reducing power output of the power grid. Energy utilization efficiency is improved, losses caused by multiple times of energy conversion are reduced, and stability of the power grid is improved.

In some embodiments, in order to improve energy utilization efficiency of the direct-current power supply with renewable energy and reduce a stability risk caused by the randomness of the direct-current power supply with renewable energy, the power supply system for a heat pump further includes a power storage device.

Referring to FIG. 4, FIG. 4 is a schematic diagram of a power supply system for a heat pump connected to a photovoltaic array and a power storage device according to an embodiment of the present disclosure.

The power supply system according to the embodiment of the present disclosure shares a same configuration as the power supply system for a heat pump described in the aforementioned embodiments, including: a controller (not shown in the figure), a first power conversion circuit 100, a second power conversion circuit 200, and an inverter 300.

The connection manners for the components may be referenced to the aforementioned embodiments and will not be repeated here.

In addition, the power supply system further includes a power conversion system PCS.

A first end of the power conversion system PCS is connected to a power storage device, and a second end of the power conversion system PCS is connected to the direct-current bus.

In an embodiment, the direct-current power supply with renewable energy includes a photovoltaic array. Correspondingly, the first power conversion circuit 100 includes a first direct-current converter DCDC1.

A first end of the first direct-current converter DCDC1 is configured to connect to the photovoltaic array, and a second end of the first direct-current converter DCDC1 is connected to the direct-current bus.

The power supply system is provided with the power conversion system PCS, and the power conversion system PCS may also supply power to the compressor. Therefore, the controller is further configured to reduce the operating power of the compressor in response to a sum of the output power of the first power conversion circuit 100, the output power of the second power conversion circuit 200, and an output power of the power conversion system PCS being less than the required power of the compressor, that is, in response to the power supplied jointly by the photovoltaic array, the power grid, and the power storage device being less than the required power of the compressor.

In addition to the above control on the compressor, the controller is further configured to, in response to the output power of the first power conversion circuit 100 being less than the required power of the compressor: regulate the output power of the power conversion system PCS to supplement a power difference between the required power and the output power of the first power conversion circuit 100, and reduce a power drawn from the power grid by the second power conversion circuit 200.

The controller is further configured to, in response to the output power of the first power conversion circuit 100 being greater than the required power of the compressor: regulate an input power of the power conversion system PCS to store the power difference between the output power of the first power conversion circuit 100 and the required power, and reduce a power fed back to the power grid by the second power conversion circuit 200.

When the power generated by the photovoltaic array is insufficient, the power stored in the power storage device is preferentially utilized, and the power from the power grid is utilized as a last resort. In this way, the power utilization efficiency of the direct-current power supply with renewable energy is improved, the power use of the direct-current power supply with renewable energy is maximized, saving energy and improving the environmental protection. Moreover, the power outputted by the power grid is relatively reduced, and stability of the power grid is improved.

Similarly, when the power generated by the photovoltaic array is sufficient, the surplus power is preferentially stored in the power storage device, and is fed back to the power grid as a last resort. In this way, the power fed back to the power grid is reduced, the power grid fluctuation is reduced, and the stability of the power grid is improved.

In some embodiments, the direct-current power supply with renewable energy includes a fuel cell.

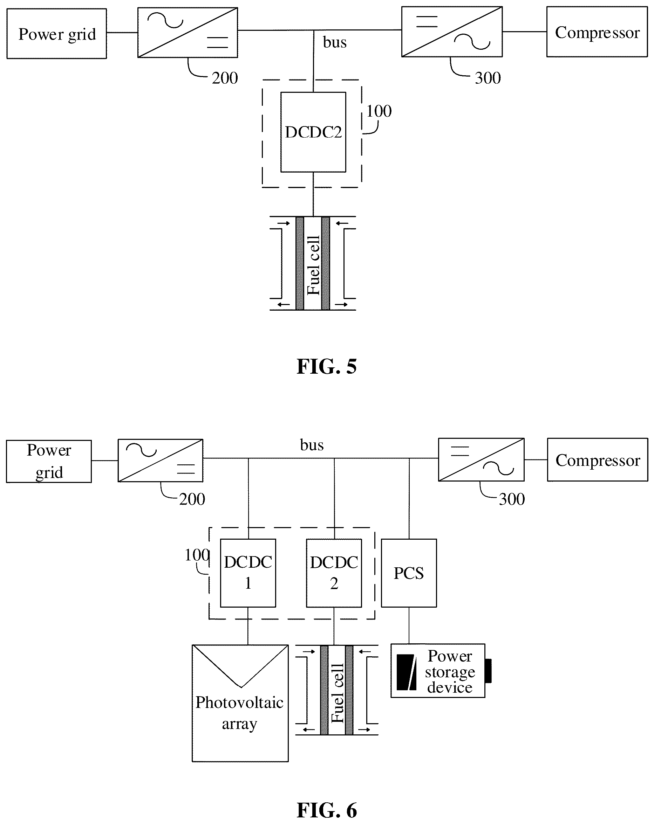

Referring to FIG. 5, FIG. 5 is a schematic diagram of a power supply system for a heat pump connected to a fuel cell according to an embodiment of the present disclosure.

The power supply system according to the embodiment of the present disclosure shares a same configuration as the power supply system for a heat pump described in the aforementioned embodiments, including: a controller (not shown in the figure), a first power conversion circuit 100, a second power conversion circuit 200, and an inverter 300.

The connection manners for the components may be referenced to the aforementioned embodiments and will not be repeated here.

In an embodiment, the direct-current power supply with renewable energy includes a fuel cell. Correspondingly, the first power conversion circuit 100 includes a second direct-current converter DCDC2.

A first end of the second direct-current converter DCDC2 is configured to connect to the fuel cell, and a second end of the second direct-current converter DCDC2 is connected to the direct-current bus.

The fuel cell generates power by using input fuel. The second direct-current converter DCDC2 is controlled in multiple manners, and the manners are not specifically limited in the present disclosure.

The controller is configured to reduce the operating power of the compressor in response to a sum of an output power of the second direct-current converter DCDC2 and the output power of the second power conversion circuit 200 being less than the required power of the compressor.

Consistent with the aforementioned embodiments, the controller is further configured to control the second power conversion circuit 200 to regulate the voltage of the direct-current bus within a preset voltage range.

Under the aforementioned topology and the operational mode of the controller, during operation of the heat pump, the compressor preferentially utilizes power generated by the fuel cell. When the power generated by the fuel cell is insufficient, the second power conversion circuit draws power from the power grid to supplement a power difference. When the power jointly supplied by the fuel cell and the power grid is still insufficient, the controller controls the compressor to reduce the operating power to maintain the power balance of the power supply system. When the power generated by the fuel cell is sufficient, the surplus power, in addition to the power consumed by the compressor, is fed back to the power grid. When the heat pump does not operate, all the power generated by the fuel cell is fed back to the power grid.

In a possible implementation, in addition to the structure shown in FIG. 5, the power supply system for a heat pump further includes a power conversion system, and the power conversion system is connected to a power storage device. The method of the controller controlling the power conversion system is similar to that in the embodiment illustrated in FIG. 4, with the only difference being that the photovoltaic array in FIG. 4 is replaced by a fuel cell. Further details are not repeated here.

In some embodiments, the direct-current power supply with renewable energy includes a photovoltaic array and a fuel cell.

Referring to FIG. 6, FIG. 6 is a schematic diagram of a power supply system for a heat pump according to another embodiment of the present disclosure.

The power supply system according to the embodiment of the present disclosure shares a same configuration as the power supply system for a heat pump described in the aforementioned embodiments, including: a controller (not shown in the figure), a first power conversion circuit 100, a second power conversion circuit 200, an inverter 300, and a power conversion system PCS.

The connection manners for the components may be referenced to the aforementioned embodiments and will not be repeated here.

In an embodiment, the direct-current power supply with renewable energy includes a photovoltaic array and a fuel cell. The first power conversion circuit includes a first direct-current converter DCDC1 and a second direct-current converter DCDC2.

A first end of the first direct-current converter DCDC1 is configured to connect to the photovoltaic array, and a second end of the first direct-current converter DCDC1 is connected to the direct-current bus.

A first end of the second direct-current converter DCDC2 is configured to connect to the fuel cell, and a second end of the second direct-current converter DCDC2 is connected to the direct-current bus.

A first end of the power conversion system PCS is connected to a power storage device, and a second end of the power conversion system PCS is connected to the direct-current bus.

Consistent with the aforementioned embodiments, the controller is configured to reduce the operating power of the compressor in response to a sum of an output power of the first direct-current converter DCDC1, an output power of the second direct-current converter DCDC2, an output power of the power conversion system PCS, and an output power of the second power conversion circuit 200 being less than the required power of the compressor, that is, in response to the power supplied jointly by the photovoltaic array, the fuel cell, the power storage device, and the power grid being less than the required power of the compressor.

Similarly, the controller may adopt the control methods of the embodiments corresponding to FIG. 3 and FIG. 4 to further control the first direct-current converter DCDC1, the power conversion system PCS, and the second power conversion circuit 200, reducing the occurrence of overvoltage in the power supply system, reducing power conversion of the power grid, enhancing the stability of the power grid, and preferentially utilizing the power supplied by the direct-current power supply with renewable energy.

Under the aforementioned topology and the operational mode of the controller, during heat pump operation, the compressor preferentially utilizes power generated by the fuel cell and the photovoltaic array. When the power generated by the fuel cell and the photovoltaic array is insufficient, the power supply system first draws power from the power storage device to supplement a power difference, and only resorts to the power grid as a secondary option. When the power supplied jointly by the photovoltaic array, the fuel cell, the power storage device and the power grid is still insufficient, the operating power of the compressor is reduced. When the power generated by the fuel cell and the photovoltaic array is sufficient, the surplus power, in addition to the power consumed by the compressor, is first fed back to the power storage device and is fed back to the power grid as a secondary option. When the fuel cell and the photovoltaic array generate excessive power that fails to be fully absorbed by the power grid, the first direct-current converter is controlled to reduce the output power of the photovoltaic array. When the heat pump does not operate, the power generated by the fuel cell and the photovoltaic array is preferentially fed back to the power storage device, and is fed back to the power grid as a secondary option. In this way, the utilization of the direct-current power supply with renewable energy can be maximized, input and output of power on the power grid side can be reduced, the power grid fluctuation can be reduced, and stability of the power grid can be improved.

Based on the power supply system for a heat pump according to the above embodiments, a heat pump system is further provided according to the present disclosure, which will be described in detail below with reference to the drawings.

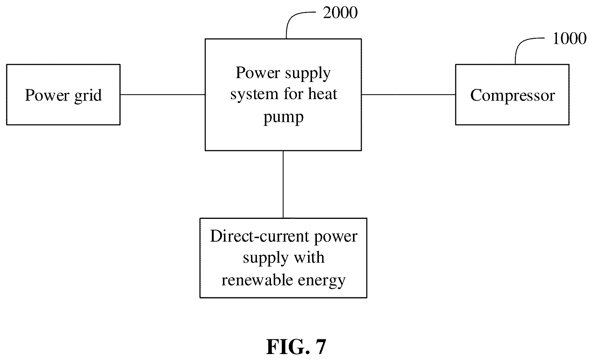

Referring to FIG. 7, FIG. 7 is a schematic diagram of a heat pump system according to an embodiment of the present disclosure.

The heat pump system according to the embodiment includes a compressor 1000 and the power supply system 2000 for a heat pump as described in the above embodiments.

A first end of the power supply system 2000 for a heat pump is configured to connect to a direct-current power supply with renewable energy.

The type of the direct-current power supply with renewable energy is not limited in the present disclosure. For example, the direct-current power supply with renewable energy may be a photovoltaic array or a fuel cell.

A second end of the power supply system 2000 for a heat pump is configured to connect to a power grid.

A third end of the power supply system 2000 for a heat pump is connected to the compressor 1000 and is configured to supply power to the compressor 1000.

The topology structure of the heat pump system is not limited in the present disclosure. For example, the heat pump system may further include other components such as an evaporator or a condenser.

The specific structure of the power supply system 2000 for a heat pump and the functions of the controller may be referenced to the above embodiments.

The heat pump system according to the embodiment includes a compressor and the power supply system for a heat pump as described in the above embodiments. The first end of the power supply system for a heat pump is configured to connect to the direct-current power supply with renewable energy, the second end of the power supply system for a heat pump is configured to connect to the power grid, and the third end of the power supply system for a heat pump is connected to the compressor to supply power to the compressor. The controller of the power supply system reduces the operating power of the compressor when the power supplied by the direct-current power supply with renewable energy and the power grid is insufficient, to maintain the power balance of the power supply system. As a result, in the heat pump system according to the embodiments of the present disclosure, the occurrence of an undervoltage can be reduced, the safety and stability of the heat pump system can be improved, and the operational efficiency of the heat pump system can be enhanced.

It should be noted that the embodiments in this specification are described in a progressive manner, and each of the embodiments focuses on its differences from the other embodiments. The same and similar parts among the embodiments may be referred to each other.

Those skilled in the art can implement or use the present disclosure based on the above description of the disclosed embodiments. Various modifications made to the embodiments are apparent to those skilled in the art. The general principle defined herein may be implemented in other embodiments without departing from the spirit and scope of the present disclosure. Therefore, the present disclosure should not be limited to the embodiments disclosed herein, but has the widest scope in accordance to the principles and the novel features disclosed herein.

## Claims

1. A power supply system for a heat pump, **characterized by** comprising a controller, a first power conversion circuit, a second power conversion circuit, and an inverter, wherein
a first end of the first power conversion circuit is configured to connect to a direct-current power supply with renewable energy, and a second end of the first power conversion circuit is connected to a direct-current bus;
a direct-current end of the inverter is connected to the direct-current bus, and an alternating-current end of the inverter is configured to connect to a compressor;
a direct-current end of the second power conversion circuit is connected to the direct-current bus, and an alternating-current end of the second power conversion circuit is configured to connect to a power grid; and
the controller is configured to reduce an operating power of the compressor in response to a sum of an output power of the first power conversion circuit and an output power of the second power conversion circuit being less than a required power of the compressor, to maintain a power balance of the power supply system.

2. The power supply system according to claim 1, wherein the controller is further configured to reduce an output power of the inverter in response to the sum of the output power of the first power conversion circuit and the output power of the second power conversion circuit being less than the required power of the compressor, wherein a reduced output power of the inverter matches a reduced operating power of the compressor.

3. The power supply system according to claim 2, wherein for reducing the operating power of the compressor, the controller is further configured to:
determine, based on a voltage of the direct-current bus, whether the sum of the output power of the first power conversion circuit and the output power of the second power conversion circuit is less than the required power of the compressor.

4. The power supply system according to claim 3, wherein the controller is further configured to obtain a regulation instruction based on the voltage of the direct-current bus, a preset minimum voltage, and a preset output instruction for the compressor; and control the compressor based on the regulation instruction, wherein
the preset output instruction comprises a torque instruction, a rotational speed instruction, or a frequency instruction for the compressor, and the regulation instruction corresponds to the preset output instruction for the compressor.

5. The power supply system according to claim 4, wherein the controller is further configured to obtain a process instruction based on the voltage of the direct-current bus and the preset minimum voltage, and determine the one with a smaller value of the process instruction and the preset output instruction as a first regulation instruction, wherein
the process instruction corresponds to the preset output instruction for the compressor.

6. The power supply system according to claim 2, wherein the direct-current power supply with renewable energy comprises a photovoltaic array, and the first power conversion circuit comprises a first direct-current converter, wherein
a first end of the first direct-current converter is configured to connect to the photovoltaic array, and a second end of the first direct-current converter is connected to the direct-current bus; and
the controller is further configured to control the first direct-current converter to perform a maximum power point tracking control on the photovoltaic array.

7. The power supply system according to claim 6, wherein the controller is further configured to control, in response to a difference between the output power of the first power conversion circuit and an input power at a direct-current end of the second power conversion circuit being greater than the operating power of the compressor, the first direct-current converter to reduce an output power of the photovoltaic array.

8. The power supply system according to claim 2, wherein the direct-current power supply with renewable energy comprises a fuel cell, and the first power conversion circuit comprises a second direct-current converter, wherein
a first end of the second direct-current converter is configured to connect to the fuel cell, and a second end of the second direct-current converter is connected to the direct-current bus.

9. The power supply system according to any one of claims 1 to 8, wherein the controller is further configured to control the second power conversion circuit to regulate a voltage of the direct-current bus within a preset voltage range.

10. The power supply system according to any one of claims 1 to 8, further comprising a power conversion system, wherein
a first end of the power conversion system is connected to a power storage device, and a second end of the power conversion system is connected to the direct-current bus; and
the controller is further configured to reduce the operating power of the compressor in response to a sum of the output power of the first power conversion circuit, the output power of the second power conversion circuit, and an output power of the power conversion system being less than the required power of the compressor, to maintain the power balance of the power supply system.

11. The power supply system according to claim 10, wherein
the controller is further configured to, in response to the output power of the first power conversion circuit being less than the required power of the compressor:
regulate the output power of the power conversion system to supplement a power difference between the required power and the output power of the first power conversion circuit; and
reduce a power drawn from the power grid by the second power conversion circuit; and
the controller is further configured to, in response to the output power of the first power conversion circuit being greater than the required power of the compressor:
regulate an input power of the power conversion system to store the power difference between the output power of the first power conversion circuit and the required power; and
reduce a power fed back to the power grid by the second power conversion circuit.

12. The power supply system according to claim 2, wherein the direct-current power supply with renewable energy comprises a photovoltaic array and a fuel cell, the first power conversion circuit comprises a first direct-current converter and a second direct-current converter, and the power supply system further comprises a power conversion system, wherein
a first end of the first direct-current converter is configured to connect to the photovoltaic array, and a second end of the first direct-current converter is connected to the direct-current bus;
a first end of the second direct-current converter is configured to connect to the fuel cell, and a second end of the second direct-current converter is connected to the direct-current bus; and
a first end of the power conversion system is connected to a power storage device, and a second end of the power conversion system is connected to the direct-current bus.

13. A heat pump system, comprising a compressor and the power supply system for a heat pump according to any one of claims 1 to 12, wherein
a first end of the power supply system for a heat pump is configured to connect to a direct-current power supply with renewable energy;
a second end of the power supply system for a heat pump is configured to connect to a power grid; and
a third end of the power supply system for a heat pump is connected to the compressor and is configured to supply power to the compressor.
